# EUROPEAN PATENT SPECIFICATION

(11) **EP 3 498 052 B1**
(45) Date of publication and mention of the grant of the patent: **04.03.2020**
(21) Application number: 17751313.2
(22) Date of filing: 27.07.2017
(51) Int. Cl.: H05B 3/74, H05B 6/12

(54) **THIN FILM HEATING COOKER HEATING ELEMENT ADJUSTMENT FOR POWER EFFICIENCY**
ENERGIEEFFIZIENZEINSTELLUNG EINES DÜNNSCHICHTKOCHFELD-HEIZELEMENT
AJUSTAGE DE LA EFFICACITÉ ÉNERGÉTIQUE D'UN ELEMENT CHAUFFANT D'UNE TABLE DE CUISSON À COUCHE MINCE

(30) Priority: 08.08.2016 TR 201611093
(43) Date of publication of application: 19.06.2019
(73) Proprietor: Arçelik Anonim Sirketi, 34445 Istanbul (TR)
(72) Inventor: YAVUZ, Pinar, 34950 Istanbul (TR); KAYA, Oguzhan, 34950 Istanbul (TR); YESILCUBUK, Alper, 34950 Istanbul (TR); OKTAY, Ulas, 34950 Istanbul (TR); KARASU, Sinan, 34950 Istanbul (TR)
(86) International application number: PCT/EP2017/068977
(87) International publication number: WO 2018/028999

(56) References cited:
- EP-A2- 1 107 648
- EP-A2- 2 618 630
- WO-A1-2014/106960
- US-A1- 2002 155 303

## Description

The present invention relates to a system for the operation of a thin film heater cooker.

It is well-known that thin film heaters are extensively used in cooking appliances operating as a cooker. Thin film heaters have a wide range of usage from windscreens to cooking. When a thin film heater is used for cooking purposes, it will normally consume approximately four times more power in comparison to its other usages. Beside space usage advantages due to the lower thickness of thin film material, a cooking hob with thin-film heating elements provides faster heating having improved efficiency and uniformity.

Among others, a prior art publication in the technical field of the invention may be referred to as EP2651182, which discloses an induction cooking hob with four heating zones. Each heating zone comprises or corresponds with at least one induction coil connected to a generator. Two or more heating zones are linked or can be linked into a cooking area by a user. The linked heating zones are controlled by a common power setting. An operator interface is provided for operating the heating zones. A control unit is provided for controlling the heating zones. The operator interface includes actuating elements corresponding with predetermined links between the heating zones. The control unit is provided for synchronizing the generators of the linked heating zones by one common controller controlling the linked heating zones by a common power setting. The common controller is a microprocessor or a microcontroller and controls the generators of the linked heating zones, so that the generators run at the same frequency. The induction cooking hob includes a glass ceramic panel. The operator interface is a touch pad applied on the glass ceramic panel. The actuating elements corresponding with predetermined links are labeled by symbols. The heating zones are arranged as a matrix on the induction cooking hob. A first heating zone is arranged on the rear portion of left hand side of the cooking hob. A second heating zone is arranged on the rear portion of right hand side of the cooking hob. A third heating zone is arranged on the front portion of left hand side of the cooking hob. A fourth heating zone is arranged on the front portion of right hand side of the cooking hob. The first heating zone can be linked with the second heating zone, the third heating zone and/or the fourth heating zone to a larger cooking area.

WO2014106960 is showing a further cooking appliance, a smart grill using a plurality of planar thin film heating elements, each heating element being in connection with wirings selectively powered by switching elements.

The present invention provides a system for the operation of a thin film heating cooker with the help of sensors aimed to sense the utensil's position and effectuate power regulation as provided by the characterizing features defined in Claim 1.

Primary object of the present invention is to provide a system for the operation of a thin film heating cooker.

The present invention proposes a thin film heating appliance with a plurality of matrix formation thin film heating cookers, each one preferably comprising a plurality of thin film heating elements. The configuration can be in the form of rectangular or C-type thin film heating elements.

A coated base below a glass surface is provided such that each thin film heating element is sandwiched between an anodization layer and said glass surface in the manner to be at least partially delimited by two busbars at different co-planar sides relative to said thin film heating element. This structural configuration is both more effective in terms of heat transfer and insulation performance but also allows easy adaptation of the thin film heating element blocks with the anodization layers due to high flexibility and shapeability of the latter in view of manufacturing difficulties.

The anodization layer covering both lower surface of said thin film heating element and said two busbars in their entireties ensures the desired heat transfer and insulation profile.

Further, there are proposed distinct power supplying schemes and configurations of thin film heaters on the anodization layer. A separate thin film heater can be applied to an individual anodization layer or a plurality of heaters can be supported by a single layer.

In the case of rectangular configuration of the film heater elements, sensor units are located around the periphery of the thin film heating elements or between edges of said rectangular thin film heating elements. Optic sensor couples may oppositely communicate at respective side edges and inductive sensors and capacitive sensors can be disposed along other edges. In the case of C-type, at least one sensor unit consisting of inductive, capacitive optical or load sensors is located centrally.

Accompanying drawings are given solely for the purpose of exemplifying a thin film heating cooker, whose advantages over prior art were outlined above and will be explained in brief hereinafter.

The drawings are not meant to delimit the scope of protection as identified in the Claims, nor should they be referred to alone in an effort to interpret the scope identified in said Claims without recourse to the technical disclosure in the description of the present invention.
Fig. 1 demonstrates a general schematic view of a rectangular type heating cell configuration according to one embodiment of the present invention.
Fig. 2 demonstrates a general schematic view of a combined heating cell according to another embodiment of the present invention.
Fig. 3 demonstrates a general schematic view of a C-type heating cell configuration according to another embodiment of the present invention.
Fig. 4a demonstrates an exemplary general schematic circuit diagram with thyristors for supplying power to thin film heater elements. Fig. 4b demonstrates another exemplary circuit diagram for supplying power to thin film heater elements (R1, R2, R3...) through switches (SW1, SW2, SW3...). Fig. 4c demonstrates the combined heating cell of Fig. 2 with switches.

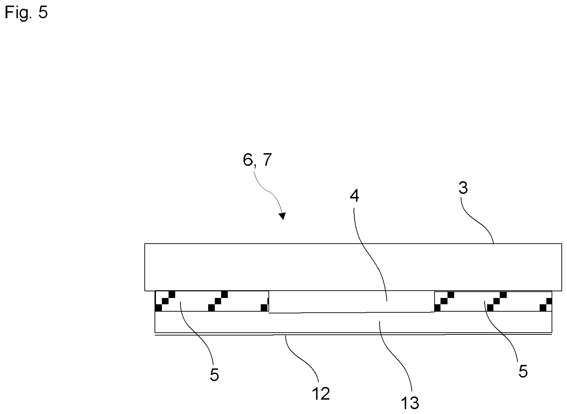

Fig. 5 demonstrates a general cross-sectional view of a layered configuration of a thin film heater element according to the present invention.

The following numerals are assigned to different part numbers used in the detailed description:
1. Thin film heating cooker
2. Sensor unit
3. Glass surface
4. Thin film heating element
5. Busbar
6. Rectangular type heating cell
7. C-type heating cell
8. Rectangular thin film heating element
9. C-type thin film heating element
10. Combined heating cell
11. Common busbar
12. Substrate
13. Anodization layer
14. Intermediate space
15. Switch

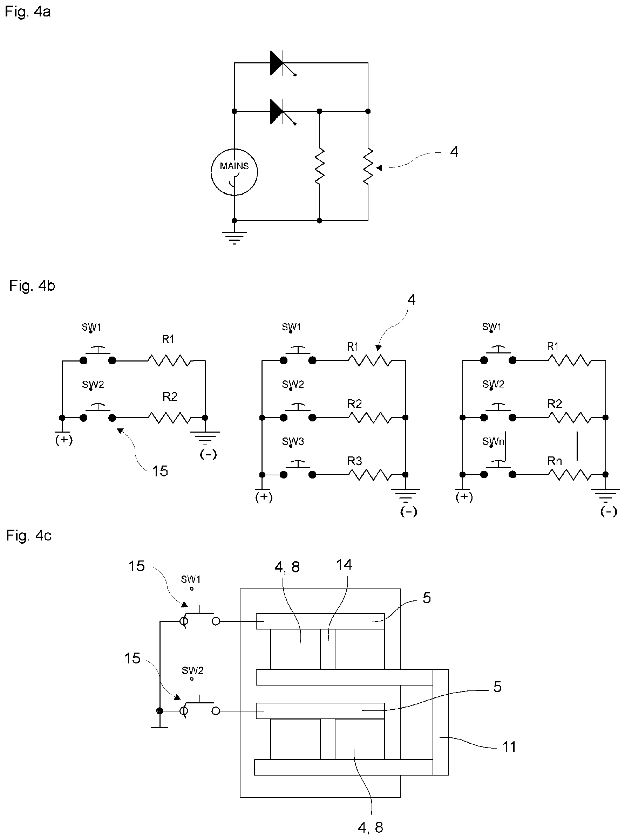

The present invention proposes a thin film heating cooker (1) having an inductive, capacitive sensor, optic or a load sensor in a sensor unit **(2)** and on/off switches **(15)** to control the power drive among thin film heating elements **(4).** Power transfer to thin film heating elements **(4)** can be also effectuated by way of using thyristors as shown in Fig. 4a. Therefore, switches **(15)** within the present technical context can also be thyristors.

The thin film heating cooker **(1)** uses thin film heating elements **(4)** as a heating source in the form of electrically conductive material placed relative to a substrate **(12).** The thin film heating elements **(4)** can be coated by means of Sol-Gel, Spray Pyrolysis, PVD and CVD and these coating elements consist of Fluorine-doped Tin Oxide (FTO), Indium Tin Oxide (ITO), graphene, Aluminum-doped Zinc Oxide (AZO) and nano silver wire. Typically, a glass surface **(3)** is placed on the thin film heating elements **(4)** to transmit the heat to utensils that are needed to be cooked. Basically, a thin-film heating element is a conductive film forming a thin film on a substrate **(12)** heating said substrate **(12).** The thin-film heating element **(4)** may for instance include a tin oxide resistive film delimited by oppositely extending busbar **(5)** conductors.

Anodization is a well-known controlled corrosion technique to generate a protective oxide film or layer that can prevent or decelerate oxidation in an advanced stage on a metal surface upon the circumstances of the natural or a particular environment. Anodization process can be performed generally on light metals such as; aluminum, magnesium and titanium. In this present invention, a coated base is produced in a shapeable structure due to the nature of oxide layer generation and anodization process on the surface of aluminum panels. The obtained structure of the coated base thanks to the anodization process has high insulation performance and high chemical durability.

These coated bases are manufactured in specific forms to accommodate thin film heating elements **(4)** positioned behind said glass surface **(3),** therefore to form a coated glass surface. The coated base has therefore a substrate **(12)** of Aluminum plate and an anodization layer **(13).**

A sensor unit **(2)** of the invention can consist of any combination of the mentioned sensors. A busbar **(5)** typically consists of electrical conductors as a generating station on which power is concentrated for distribution. Said busbars **(5)** can be formed by ink-jet printing, the Chemical Vapor Deposition (CVD) or Physical Vapor Deposition (PVD) methods in any size and geometry. Busbars **(5)** manufactured in accordance with these methods have a significant advantage of thermal performance and conductivity when compared with the busbars **(5)** applied as metal paste. Busbars **(5)** mentioned above are connected to multiple thin film heating elements **(4)** as will be delineated below.

A thin film heater group may comprise a plurality of and preferably four thin film heating elements **(4)** and at least three busbars **(5)** to be selectively powered through two switches **(15)** as shown in Fig. 4c. One of these busbars **(5)** is preferably a common busbar **(11).** In reference to Fig. 4c, when both SW1 and SW2 switches **(15)** are switched on, all thin film heating elements **(4)** are supplied power. If SW1 is switched on and SW2 switched off, the thin film heating elements **(4)** connected through SW1 is active. Likewise, when SW1 is switched off and SW2 is switched on, the thin film heating elements **(4)** connected through SW2 are operational. With different resistance values for each thin film heating element **(4)** in connection with SW1 or SW2 and with parallel circuit configuration of said elements connected through different switches **(15),** three different power setting is applicable. Further, in order for avoiding excessive heating of a combined heating cell **(10)** shown in Fig. 4c, an intermediate space **(14)** is provided between each pair of thin film heating elements **(4)** connected to the same busbar **(5).** C-type thin film heating elements **(9)** exhibiting an improved heat distribution profile requiring a thinner anodization layer **(13)** for insulation can be used instead of rectangular thin film heating elements **(8)** and rectangular type heating cells **(6).** C-type heating cells (7) are explained in more detail below. C-type thin film heating elements **(9)** can be configured such that one C-type thin film heating element **(9)** encloses another C-type thin film heating elements **(9).** This arrangement (not shown) is advantageous for obtaining an increased power setting in the thin film heating cooker **(1).**

According to the present invention, the anodization layer **(13)** can be configured to support only a certain number of thin film heating elements **(4).** For instance, a combined heating cell **(10)** comprising at least two and preferably four thin film heating elements **(4)** and at least three busbars **(5)** to be selectively powered through two switches **(15)** is supported by a single anodization layer **(13)** and a plurality of combined heating cells **(10)** provides a matrix formation as the thin film heating cooker top **(1)** surface. Alternatively, all combined heating cells **(10)** are supported by a single common anodization layer **(13),** in which case, a much more flexible manufacturing scheme is possible. However, this latter arrangement is more prone to insulation problems contrary to the case where each anodization layer **(13)** is subject to heat transfer by a single respective combined heating cell **(10).**

Different sensor units **(2)** can be used in accordance with the present invention. Inductive sensors typically operate in line with the Faraday's law of electromagnetic induction. As is known to the skilled reader, in case a metal object is placed across the inductive sensor, eddy currents are generated within the ferromagnetic base. In this case, change of the voltage drop at the terminals of the coil provides an indication for the presence of the metal object. Secondly, a conventional capacitive sensor that generates a capacitive field through an RC oscillator can be used. The metal or non-metal particle enters the capacitive field and this in turn causes a change in the dielectric level. Thereby capacitive sensors detects if there is a metal or non-metal object by means of variation of the oscillation frequency. Further, optical sensors or photocells comprising a transmitter or light source and a receiver to sense the light can be used. Light source emits light at a particular frequency at the transmitting side. The receiver is used to receive the light from the source in the determined frequency. Finally, a known type of load sensors using a strain gauge measuring the deformation as a change in electrical resistance, which is proportional to the applied forces, can also be used.

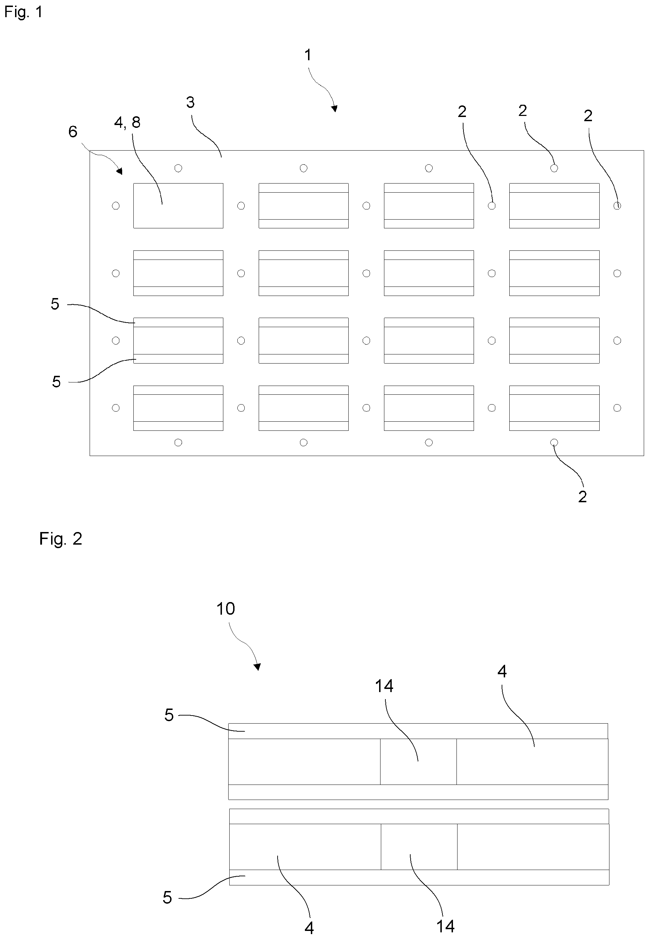

In one embodiment of the present invention, the configuration shown in Figure 2 or 4c relates to a combined heating cell **(10)** having rectangular thin film heating elements **(4).** The busbar **(5)** conductors are located oppositely along the longer edges of said rectangular thin film heating elements **(4),** which is more advantageous in terms of accelerated heating. As mentioned above, the heating elements can be connected in parallel or in series to provide different power rates with the same voltage value. The sensor units **(2)** are located either around the periphery of the thin film heating elements **(4)** or between inner edges of said rectangular thin film heating elements **(4).**

According to the embodiment of Fig. 2 or 4c, the busbar **(5)** typically comprise a pair of elongate, parallel rods at two longer sides of the thin film heating elements **(4).** The configuration of busbar **(5)** conductors along two longitudinal edges provides faster and more effective heating along the surface of the thin film heating elements **(4).**

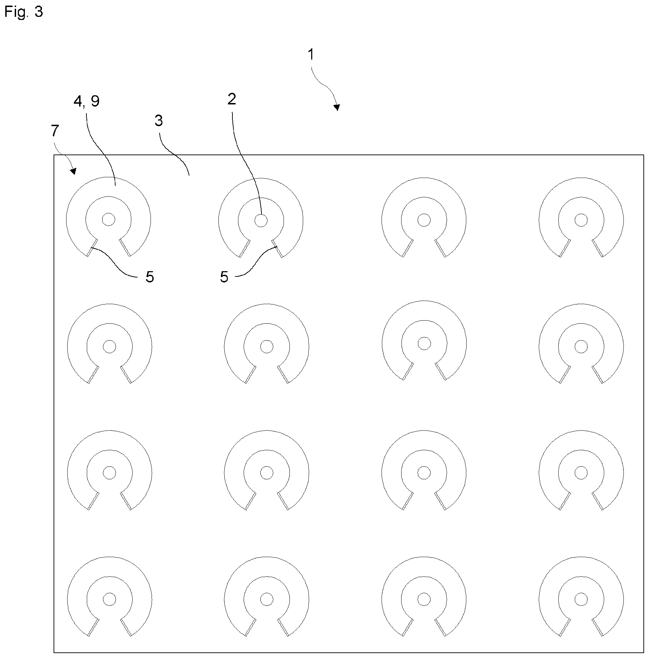

In another variation of the present invention, the configuration shown in Figure 3 relates to the thin film heating elements **(4)** in the form of a C-type thin film heating elements **(9).** The busbar **(5)** is placed at two ends of the C-shape heating element, forming a perpendicularly extending terminal relative to the curved axis of the C shape structure. The heating elements can be connected in parallel or in series to provide different power rates with the same voltage value. The sensor units **(2)** are located in the center of said C type thin film heating element **(9).** The sensor unit **(2)** can be formed as a sensor assembly consisting of inductive, capacitive, optical, or load sensors.

In one embodiment of the present invention, a thin film heater cooker **(1)** comprising a plurality of thin film heating elements **(4)** forming a two-dimensional web of neighboring thin film heating elements **(4)** and at least one sensor unit **(2),** each of said thin film heating elements **(4)** being supplied power by a busbar **(5).**

In a further embodiment of the present invention, each thin film heating element **(4)** is placeable on an anodization layer **(13)** so as to be at least partially delimited by two busbars **(5)** at different co-planar sides relative to said thin film heating element **(4).**

In a further embodiment of the present invention, each thin film heating element **(4)** is configured to be interposed between said anodization layer **(13)** and an upper glass surface **(3)** in the manner that said anodization layer **(13)** covers both lower surface of said thin film heating element **(4)** and lower surfaces of said two busbars **(5)** in their entireties.

In a further embodiment of the present invention, a plurality of combined heating cells **(10)** is formed, each one by a plurality of thin film heating elements **(4),** each thin film heating element **(4)** being in connection with a busbar **(5)** selectively powered through a switch **(15).**

In a further embodiment of the present invention, said thin film heating elements **(4)** in said combined heating cell **(10)** are rectangular thin film heating elements **(8)** or C-type thin film heating elements **(9).**

In a further embodiment of the present invention, said combined heating cell **(10)** comprises a plurality of rectangular thin film heating elements **(8),** three busbars **(5),** two of which being selectively powered through a respective switch **(15)** and the third busbar being a common busbar **(11)** in connection with all of the rectangular thin film heating elements **(8).**

In a further embodiment of the present invention, said combined heating cell **(10)** comprises intermediate spaces **(14)** between each pair of thin film heating elements **(4)** connected to the same busbar **(5).**

In a further embodiment of the present invention, said C-type thin film heating elements **(9)** are configured such that one C-type thin film heating element **(9)** encloses another C-type thin film heating elements **(9).**

In a further embodiment of the present invention, said anodization layer **(13)** is created on a substrate **(12),** said substrate **(12)** being free of contact relation with said busbars **(5).**

In a further embodiment of the present invention, said sensor unit **(2)** is provided in the form of an inductive, capacitive, optic or load sensor.

In a further embodiment of the present invention, said busbars **(5)** and thin film heating elements **(4)** are formed on the anodization layer **(13)** through chemical vapor deposition or physical vapor deposition.

In a further embodiment of the present invention, said thin film heating elements **(4)** are formed by fluorine-doped tin oxide, indium tin oxide, graphene, aluminum-doped zinc oxide or nano silver wire.

In a further embodiment of the present invention, the combined heating cell **(10)** is configured such that said busbar **(5)** conductors are located oppositely along the longer edges of said rectangular thin film heating elements **(4).**

In a further embodiment of the present invention, each of said sensor units **(2)** are located around the periphery of the thin film heating elements **(4)** or between inner edges of said rectangular thin film heating elements **(4).**

In a further embodiment of the present invention, each of said C-type thin film heating elements **(9)** have busbar **(5)** conductors placed at two ends thereof, forming a perpendicularly extending terminal relative to the curved axis of the C-shape structure.

In a further embodiment of the present invention, a sensor unit **(2)** is located in the center of said C type thin film heating element **(9).**

In a further embodiment of the present invention, each combined heating cell **(10)** is supported by a respective separate anodization layer **(13).**

In a further embodiment of the present invention, all combined heating cells **(10)** are supported by a single common anodization layer **(13).**

The C-type configuration is advantageous in that the surface area of the thin film heating elements (4) provide a more concentrated heating in view of the more compact space usage by each C-type element and also provides acceptably fast heating results compared to their smaller busbar (5) conductor sizes.

## Claims

1. A thin film heater cooker **(1)** comprising a plurality of thin film heating elements **(4)** forming a two-dimensional web of neighboring thin film heating elements **(4)** and at least one sensor unit **(2),** each of said thin film heating elements **(4)** being supplied power by a busbar (5),
wherein a plurality of combined heating cells (10) is formed, each one by a plurality of thin film heating elements (4), each thin film heating element (4) being in connection with a busbar (5) selectively powered through a switch (15),
**characterized in that** each thin film heating element **(4)** is placed on an anodization layer **(13)** so as to be at least partially delimited by two busbars **(5)** at different co-planar sides relative to said thin film heating element **(4),**
each thin film heating element **(4)** is configured to be interposed between said anodization layer **(13)** and an upper glass surface **(3)** in the manner that said anodization layer **(13)** covers both lower surface of said thin film heating element **(4)** and lower surfaces of said two busbars **(5)** in their entireties.

2. A thin film heater cooker **(1)** as in Claim 1, **characterized in that** said thin film heating elements **(4)** in said combined heating cell **(10)** are rectangular thin film heating elements **(8)** or C-type thin film heating elements **(9).**

3. A thin film heater cooker **(1)** as in Claim 1, **characterized in that** said combined heating cell **(10)** comprises a plurality of rectangular thin film heating elements **(8),** three busbars **(5),** two of which being selectively powered through a respective switch **(15)** and the third busbar being a common busbar **(11)** in connection with all of the rectangular thin film heating elements **(8).**

4. A thin film heater cooker **(1)** as in Claim 1 or 3, **characterized in that** said combined heating cell **(10)** comprises intermediate spaces **(14)** between each pair of thin film heating elements **(4)** connected to the same busbar **(5).**

5. A thin film heater cooker **(1)** as in Claim 2, **characterized in that** said C-type thin film heating elements **(9)** are configured such that one C-type thin film heating element **(9)** encloses another C-type thin film heating elements **(9).**

6. A thin film heater cooker **(1)** as in any preceding Claim, **characterized in that** said anodization layer **(13)** is created on a substrate **(12),** said substrate **(12)** being free of contact relation with said busbars **(5).**

7. A thin film heater cooker **(1)** as in Claim 1, **characterized in that** said sensor unit **(2)** is provided in the form of an inductive, capacitive, optic or load sensor.

8. A thin film heater cooker **(1)** as in any preceding Claim, **characterized in that** said busbars **(5)** and thin film heating elements **(4)** are formed on the anodization layer **(13)** through chemical vapor deposition or physical vapor deposition.

9. A thin film heater cooker **(1)** as in any preceding Claim, **characterized in that** said thin film heating elements **(4)** are formed by fluorine-doped tin oxide, indium tin oxide, graphene, aluminum-doped zinc oxide or nano silver wire.

10. A thin film heater cooker **(1)** as in Claim 1, 3 or 4, **characterized in that** the combined heating cell **(10)** is configured such that said busbar **(5)** conductors are located oppositely along the longer edges of said rectangular thin film heating elements **(4).**

11. A thin film heater cooker **(1)** as in Claim 7 and 10, **characterized in that** each of said sensor units **(2)** are located around the periphery of the thin film heating elements **(4)** or between inner edges of said rectangular thin film heating elements **(4).**

12. A thin film heater cooker **(1)** as in Claim 2 or 5, **characterized in that** each of said C-type thin film heating elements **(9)** have busbar **(5)** conductors placed at two ends thereof, forming a perpendicularly extending terminal relative to the curved axis of the C-shape structure.

13. A thin film heater cooker **(1)** as in Claim 2, 5 or 12, **characterized in that** a sensor unit **(2)** is located in the center of said C type thin film heating element **(9).**

14. A thin film heater cooker **(1)** as in any preceding Claim, **characterized in that** each combined heating cell **(10)** is supported by a respective separate anodization layer **(13).**

15. A thin film heater cooker **(1)** as in any preceding Claim, **characterized in that** all combined heating cells **(10)** are supported by a single common anodization layer **(13).**

## Patentansprüche

1. Ein Dünnschichtheizkocher **(1)** umfasst mehrere Dünnschichtheizelemente **(4),** die eine zweidimensionale Bahn von benachbarten Dünnschichtheizelementen **(4)** bilden, und mindestens eine Sensoreinheit **(2),** mindestens eine Sensoreinheit **(2),** wobei jedes der Dünnschichtheizelemente **(4)** von einer Stromschiene **(5)** mit Strom versorgt wird, darüber hinaus werden mehrere kombinierte Heizzellen **(10)** jeweils durch mehrere Dünnschichtheizelemente **(4)** gebildet, wobei jedes der Dünnschichtheizelemente **(4)** in Verbindung mit einer Sammelschiene steht, die wahlweise über einen Schalter **(15)** mit Strom versorgt wird; **gekennzeichnet ist es dadurch,**
dass jedes Dünnfilmheizelement **(4)** so auf der Anodisierungsschicht **(13)** angeordnet ist, dass es zu mindestens teilweise durch zwei Stromschienen **(5)** an unterschiedlich komplanaren Seiten bezüglich auf das Dünnfilmheizelement **(4)** begrenzt sind, und
dass jedes Dünnfilmheizelement **(4)** so konfiguriert ist, dass es zwischen der Anodisierungsschicht **(13)** und einer oberen Glasoberfläche **(3)** in solch einer Weise angeordnet ist, dass die Anodisierungsschicht **(13)** beide untere Oberflächen des Dünnfilmheizelements **(4)** und Unterseiten der beiden Stromschienen **(5)** in ihrer Gesamtheit bedeckt.

2. Ein Dünnschichtheizkocher **(1),** wie in Anspruch 1 aufgeführt, **ist dadurch gekennzeichnet, dass** die Dünnfilmheizelemente **(4)** in der kombinierten Heizzelle **(10)** rechteckige Dünnfilmheizelemente **(8)** oder C-Typ-Dünnfilmheizelemente **(9)** sind.

3. Ein Dünnschichtheizkocher **(1),** wie in Anspruch 1 aufgeführt, **ist dadurch gekennzeichnet, dass** die kombinierte Heizzelle **(10)** mehrere rechteckige Dünnfilmheizelemente **(8)** aufweist, von denen drei Sammelschienen **(5)** über einen jeweiligen Schalter **(15)** mit Strom versorgt werden und die dritte Sammelschiene eine gemeinsame Sammelschiene **(11)** in Verbindung mit allen rechteckigen Dünnschichtheizelementen **(8)** ist.

4. Ein Dünnschichtheizkocher **(1),** wie in Anspruch 1 oder 3 aufgeführt, **ist dadurch gekennzeichnet, dass** die kombinierte Heizzelle **(10)** sogenannte Zwischenräume **(14)** zwischen jedem Paar von Dünnschichtheizelementen **(4)** aufweist, die mit der gleichen Sammelschiene **(5)** verbunden sind

5. Ein Dünnschichtheizkocher **(1),** wie in Anspruch 2 aufgeführt, **ist dadurch gekennzeichnet, dass** die C-Typ-Dünnschichtheizelemente **(9)** so konfiguriert sind, dass ein C-Typ-Dünnschichtheizelement **(9)** ein anderes C-Typ-Dünnschichtheizelement **(9)** umschließen kann.

6. Ein Dünnschichtheizkocher **(1),** wie in einem der vorherigen Ansprüchen aufgeführt, **ist dadurch gekennzeichnet, dass** die Anodisierungsschicht **(13)** auf einem Substrat **(12)** erzeugt wird, wobei das Substrat **(12)** keine Kontaktbeziehung mit den Sammelschienen **(5)** darstellet.

7. Ein Dünnschichtheizkocher **(1),** wie in Anspruch 1 aufgeführt, **ist dadurch gekennzeichnet, dass** die Sensoreinheit **(2)** in Form eines induktiven, kapazitiven, optischen oder Lastsensors vorgesehen ist.

8. Ein Dünnschichtheizkocher **(1),** wie in einem der vorherigen Ansprüchen aufgeführt, **ist dadurch gekennzeichnet, dass** die Sammelschienen **(5)** und Dünnschichtheizelemente **(4)** auf der Anodisierungsschicht **(13)** durch ein chemisches oder physikalisches Aufdampfen gebildet sind.

9. Ein Dünnschichtheizkocher **(1),** wie in einem der vorherigen Ansprüchen aufgeführt, **ist dadurch gekennzeichnet, dass** die Dünnfilmheizelemente (4) durch mit Fluor dotiertes Zinnoxid, Indiumzinnoxid, Graphen, mit Aluminium dotiertes Zinkoxid oder Nanosilberdraht gebildet sind.

10. Ein Dünnschichtheizkocher **(1),** wie in Anspruch 1, 3 oder 4 aufgeführt, **ist dadurch gekennzeichnet, dass** die kombinierte Heizzelle **(10)** so konfiguriert ist, dass die Leiter der Sammelschiene **(5)** gegenüberliegend entlang den längeren Rändern der rechteckigen Dünnfilmheizelemente **(4)** angeordnet sind.

11. Ein Dünnschichtheizkocher **(1),** wie in Anspruch 7 und 10 aufgeführt, **ist dadurch gekennzeichnet, dass** jede Sensoreinheit **(2)** um den Umfang der Dünnfilmheizelemente **(4)** oder zwischen Innenkanten der rechteckigen Dünnfilmheizelemente **(4)** angeordnet ist.

12. Ein Dünnschichtheizkocher **(1),** wie in Anspruch 2 oder 5 aufgeführt, **ist dadurch gekennzeichnet, dass** jedes der C-Typ-Dünnfilmheizelemente **(9)** einen Stromschienenleiter **(5)** aufweist, die an zwei Enden davon angeordnet sind und einen sich senkrecht zur gekrümmten Achse der C-förmigen Struktur erstreckenden Anschluss bilden.

13. Ein Dünnschichtheizkocher **(1),** wie in Anspruch 2, 5 oder 12 aufgeführt, **ist dadurch gekennzeichnet, dass** eine Sensoreinheit **(2)** in der Mitte des C-Typ-Dünnschichtheizelements **(9)** angeordnet ist.

14. Ein Dünnschichtheizkocher **(1),** wie in einem der vorherigen Ansprüchen aufgeführt, **ist dadurch gekennzeichnet, dass** jede kombinierte Heizzelle **(10)** von einer jeweiligen separaten Anodisierungsschicht **(13)** getragen wird.

15. Ein Dünnschichtheizkocher **(1),** wie in einem der vorherigen Ansprüchen aufgeführt, **ist dadurch gekennzeichnet, dass** alle kombinierten Heizzellen **(10)** von einer einzigen gemeinsamen Anodisierungsschicht **(13)** getragen werden.

## Revendications

1. Un cuiseur chauffant à couche mince **(1)** comprenant une pluralité d'éléments chauffants à couche mince **(4)** formant un réseau à deux dimensions d'éléments chauffants à couche mince **(4)** avoisinants et au moins une unité de détection **(2)** chacun desdits éléments chauffants à couche mince **(4)** étant électriquement alimenté par une barre omnibus **(5),** dans lequel une pluralité de cellules chauffantes combinées (10) est formée, chacune par une pluralité d'éléments chauffants à couche mince (4), chaque élément chauffant à couche mince (4) étant en connexion avec une barre omnibus (5) sélectivement alimentée par un commutateur (15), **caractérisé en ce que**
Chaque élément chauffant à couche mince **(4)** est placé sur une couche d'anodisation **(13)** de manière à être au moins partiellement délimitée par deux barres omnibus **(5)** sur les différents côtés coplanaires relativement audit élément chauffant à couche mince **(4),**
chaque élément chauffant à couche mince **(4)** est configuré de sorte à s'interposer entre ladite couche d'anodisation **(13)** et une surface supérieure en verre **(3)** de manière à ce que ladite couche d'anodisation **(13)** recouvre à la fois la surface inférieure dudit élément chauffant à couche mince **(4)** et les surfaces inférieures desdits deux barres omnibus **(5)** dans leur intégralité.

2. Un cuiseur chauffant à couche mince **(1)** selon la Revendication 1, **caractérisé en ce que** lesdits éléments chauffants à couche mince **(4)** dans ladite cellule chauffante combinée **(10)** sont des éléments chauffants à couche mince rectangulaires **(8)** ou des éléments chauffants à couche mince de type C **(9).**

3. Un cuiseur chauffant à couche mince **(1)** selon la Revendication 1, **caractérisé en ce que** ladite cellule chauffante combinée **(10)** comprend une pluralité d'éléments chauffants à couche mince rectangulaires **(8),** trois barres omnibus **(5),** dont deux sont sélectivement alimentées par l'intermédiaire d'un commutateur respectif **(15)** et dont la troisième barre omnibus est une barre omnibus commune **(11)** en connexion avec tous les éléments chauffants à couche mince rectangulaires **(8).**

4. Un cuiseur chauffant à couche mince **(1)** selon la Revendication 1 ou 3, **caractérisé en ce que** ladite cellule chauffante combinée **(10)** comprend des espaces intermédiaires **(14)** entre chaque paire d'éléments chauffants à couche mince **(4)** connectée à la même barre omnibus **(5).**

5. Un cuiseur chauffant à couche mince **(1)** selon la Revendication 2, **caractérisé en ce que** lesdits éléments chauffants à couche mince de type C **(9)** sont configurés de telle sorte qu'un élément chauffant à couche mince de type C **(9)** renferme un autre élément chauffant à couche mince de type C **(9).**

6. Un cuiseur chauffant à couche mince **(1)** selon l'une quelconque des revendications précédentes, **caractérisé en ce que** ladite couche d'anodisation **(13)** est créée sur un substrat **(12),** ledit substrat **(12)** étant sans relation de contact avec lesdites barres omnibus **(5).**

7. Un cuiseur chauffant à couche mince **(1)** selon la Revendication 1, **caractérisé en ce que** ladite unité de détection **(2)** se présente sous forme d'un capteur inductif, capacitif, optique ou de charge.

8. Un cuiseur chauffant à couche mince **(1)** selon l'une quelconque des revendications précédentes, **caractérisé en ce que** lesdites barres omnibus **(5)** et lesdits éléments chauffants à couche mince **(4)** sont formés sur la couche d'anodisation **(13)** par la déposition chimique en phase vapeur ou déposition physique en phase vapeur.

9. Un cuiseur chauffant à couche mince **(1)** selon l'une quelconque des revendications précédentes, **caractérisé en ce que** lesdits éléments chauffants à couche mince **(4)** sont formés à base d'oxyde d'étain dopé au fluor, d'oxyde d'étain-indium, de graphène, d'oxyde de zinc dopé à l'aluminium ou de fil nano-argent.

10. Un cuiseur chauffant à couche mince **(1)** selon la Revendication 1, 3 ou 4, **caractérisé en ce que** la cellule chauffante combinée **(10)** est configurée de telle sorte que les conducteurs desdites barres omnibus **(5)** sont situés en s'opposant le long des bords longs desdits éléments chauffants à couche mince rectangulaires **(4).**

11. Un cuiseur chauffant à couche mince (1) selon la Revendication 7 et 10, **caractérisé en ce que** chacune desdites unités de détection (2) sont situées autour de la périphérie des éléments chauffants à couche mince **(4)** éléments chauffants à couche mince rectangulaires rectangulaire à couche mince éléments **(4).**

12. Un cuiseur chauffant à couche mince **(1)** selon la Revendication 2 ou 5, **caractérisé en ce que** chacun desdits éléments chauffants à couche mince de type C **(9)** comporte des conducteurs de barre omnibus **(5)** placés aux deux extrémités de ceux-ci, formant une borne s'étendant perpendiculairement par rapport à l'axe incurvé de la structure en forme de C.

13. Un cuiseur chauffant à couche mince **(1)** selon la Revendication 2, 5 ou 12, **caractérisé en ce que** l'unité de détection **(2)** est située au centre dudit élément chauffant à couche mince de type C **(9).**

14. Un cuiseur chauffant à couche mince **(1)** selon l'une quelconque des revendications précédentes, **caractérisé en ce que** chaque cellule chauffante combinée **(10)** est supportée par une couche d'anodisation respective séparée **(13).**

15. Un cuiseur chauffant à couche mince **(1)** selon l'une quelconque des revendications précédentes, **caractérisé en ce que** toutes les cellules chauffantes combinées **(10)** sont supportées par une couche d'anodisation commune unique **(13).**
